# EUROPÄISCHE PATENTSCHRIFT

(11) **EP 2 759 930 B1**
(45) Veröffentlichungstag und Bekanntmachung des Hinweises auf die Patenterteilung: **15.04.2020**
(21) Anmeldenummer: 13152889.5
(22) Anmeldetag: 28.01.2013
(51) Int. Cl.: G06F 8/61, G06F 9/451

(54) **Verfahren zur Installation einer Software-Anwendung**
Method for installing a software application
Procédé d'installation d'une application logicielle

(43) Veröffentlichungstag der Anmeldung: 30.07.2014
(73) Patentinhaber: Siemens Aktiengesellschaft, 80333 München (DE)
(72) Erfinder: Geissler, Klaus, 76532 Baden-Baden (DE)

(56) Entgegenhaltungen:
- EP-A2- 1 672 489
- US-A- 5 794 052
- US-A1- 2002 111 933
- US-A1- 2006 101 460
- US-A1- 2007 245 321
- US-B1- 6 859 820

## Beschreibung

Die vorliegende Erfindung betrifft ein Verfahren zur Installation einer Software-Anwendung auf einer Datenverarbeitungs-Einrichtung, wobei die Software-Anwendung
- Ablauf-Elemente zum Erreichen einer Funktionalität der Software-Anwendung und
- vorgegebene oder vorgebbare Anwendungs-Sprachelemente zur Ausgabe von Sprachinformationen für einen Benutzer der Software-Anwendung in einer Benutzersprache über eine Ausgabe-Einrichtung umfasst.

Derartige Verfahren sind aus dem Stand der Technik bekannt. So offenbart beispielsweise die Research Disclosure RD461110, publiziert auf www.researchdisclosure.com ein Verfahren zur nachträglichen Installation eines so genannten "Language Packs" zu einem Computerprogramm, welches bereits auf einem Rechner installiert wurde. Weiterhin offenbart die US-Veröffentlichungsschrift US 2007/0016892 A1 ein Verfahren zur Erstellung eines erweiterbaren Installationspakets zur Installation einer bestimmten Sprachdatei zu einer Softwareanwendung.

US 5,794,052 offenbart ein Verfahren zur Installation einer Softwareanwendung in einer vom Benutzer ausgewählten Benutzersprache.

Es ist ein Nachteil des Standes der Technik, dass die Installation zusätzlicher Sprachen für eine bestimmte Computer-Software einen relativ aufwendigen Installationsprozess für einen Benutzer erfordert.

Daher ist es eine Aufgabe der vorliegenden Erfindung, die Installation einer Sprachversion einer Computer-Software oder eines Anwendungsprogramms zu vereinfachen oder die zur Installation einer solchen Anwendung notwendigen Ressourcen zu reduzieren und/oder vereinfachen.

Diese Aufgabe wird gelöst durch ein Verfahren mit den Merkmalen des Anspruchs 1.

Dadurch, dass die als gesondertes Sprachmodul vorliegende Anwendungs-Sprachelemente in der Benutzersprache bereits anfangs beim Hauptinstallations-Modul registriert werden, ermöglicht das dargestellte Verfahren eine einfache Installation der Software-Anwendung inklusive der entsprechenden Sprachdateien in der Benutzersprache.

Weiterhin ermöglicht das dargestellte Verfahren eine flexible Verwendung verschiedener Benutzersprachen, da für eine neue Benutzersprache nur ein weiteres Benutzersprache-Installationsmodul bereitgestellt werden muss, welches dann gemäß dem dargestellten Verfahren beim Hauptinstallations-Modul registriert wird und dann entsprechend installiert werden kann. Weiterhin wird durch die Verwendung eines getrennten Benutzersprache-Installations-Moduls die Installationsdatei für die Ablaufelemente, also z. B. das eigentliche Computerprogramm, nicht durch zusätzliche Sprachinformationen vergrößert, so dass auch eine Ressourcen schonendere Installation möglich wird.

Dabei kann eine Software-Anwendung beispielsweise als ein Computerprogramm, ein Steuerungsprogramm, ein Automatisierungsprogramm oder vergleichbare Anwendungen ausgebildet und eingerichtet sein.

Weiterhin kann die Datenverarbeitungseinrichtung beispielsweise als ein Computer, ein Computernetzwerk, ein PC, eine Automatisierungseinrichtung, eine speicherprogrammierbare Steuerung (SPS) oder vergleichbare Einrichtungen eingerichtet und ausgebildet sein.

Ablaufelemente können beispielsweise derart ausgebildet und eingerichtet sein, dass sie das Funktionsgerüst der Software-Anwendung bilden, welches die gewünschte Funktionalität der Software-Anwendung ganz oder zumindest teilweise erzeugt. So können Ablaufelemente beispielsweise als Rechen-, Vergleichs-, Bearbeitungs-, Sprung-, Aufrufs-, Rücksprung-, Ein-, und/oder Ausgabe-Operationen ausgebildet sein. Insbesondere können die Ablaufelemente derart ausgestaltet sein, dass bei einer Anpassung der Software-Anwendung in eine andere Landessprache oder einer anderen Lokalisierung der Software-Anwendung bezüglich der Ablaufelemente keine Änderungen notwendig sind, um die Software-Anwendung für einen Benutzer sinnvoll zu lokalisieren.

Unter der Funktionalität der Software-Anwendung wird insbesondere die oder eine eigentliche Aufgabe bzw. ein eigentlicher Einsatzzweck und Hintergrund der Software-Anwendung verstanden. Funktionalitäten können beispielsweise die Steuerung einer Anlage, Maschine oder eines Gerätes, eine Produktionssteuerung oder Überwachung, ein Bedienen und/oder Beobachten-Programm, Erstellung und Bearbeitung von Produktionsdaten und/oder grafischen CAD-Daten, eine Produktionssteuerung und/oder weitere vergleichbare Funktionalitäten sein. Funktionalitäten können aber auch allgemeiner eine Datenbank-Funktionalität, Buchhaltung, Auftragsabwicklung, Tabellen-Kalkulation, Textverarbeitung, Bildverarbeitung und weitere Funktionalitäten bzw. auch beliebige Kombinationen davon sein.

Anwendungs-Sprachelemente können beispielsweise jede Art von elektronisch speicherbaren Elementen sein, die zur Ausgabe von Sprachinformationen vorgesehen, eingerichtet und/oder geeignet sind bzw. dafür eingesetzt werden können. Dabei können Anwendungs-Sprachelemente beispielsweise alle solchen zur Ausgabe an einen Benutzer vorgesehenen Elemente sein, die lokalisierbar, d. h. an ein Land, eine Region, einen Dialekt, eine Sprache und/oder vergleichbare Kriterien eines Benutzers anpassbar bzw. angepasst sind. So können solche Anwendungs-Sprachelemente beispielsweise Texte, Audio-, Video-, und/oder grafische Elemente sein, die in einer Landessprache, einer Benutzersprache, einem Dialekt, oder sonst auf eine geeignete Art an eine Region oder lokale Gegebenheiten angepasst sind bzw. anpassbar sind oder anpassbar sein müssen. Dies können beispielsweise Textelemente, Audio-Elemente, Video-Elemente oder Grafik-Elemente und/oder Icons in bestimmten Sprachen oder an bestimmte lokale Gegebenheiten angepasst und/oder auch länderspezifisch sein. In diesem Sinne können neben normalem Text, Sprach-, Audio- oder Audio-Video-Informationen auch grafische Informationen, beispielsweise so genannte Icons, Sprachelemente sein. Insbesondere können solche graphischen Informationen lokalisierbar sein, die in verschiedenen Ländern, Regionen oder räumlichen Bereichen üblicherweise unterschiedlich ausgestaltet sind oder sein können.

Unter Sprachinformationen werden die den Anwendungs-Sprachelemente zugrundeliegende bzw. von diesen beinhalteten Informationen in einer für einen Benutzer vorgesehenen Sprache, einem vorgesehenen Dialekt bzw. die einem Ort oder einem geografischen Bereich angepasst bzw. anpassbar sind verstanden. Sprachinformationen können z.B. auch solche sein, die entsprechend lokalisierbar sind bzw. lokalisiert werden müssen, um für Benutzer einer entsprechenden Region, eines entsprechenden Landes oder ähnlichem besser oder überhaupt verständlich zu sein.

Vorzugsweise können Anwendungs-Sprachelemente insbesondere alphanumerisch oder auch grafisch gespeicherte Worte, als Audio-Information gespeicherte Worte oder lokalisierbare bzw. lokalisierte Grafik-Elemente oder Icons in der Benutzersprache bzw. der Benutzersprache angepasst sein.

Eine Ausgabe-Einrichtung kann beispielsweise ein Bildschirm, ein Monitor, ein Display, eine optische Anzeige und/oder ein Lautsprecher bzw. auch mehrere der vorstehend genannten Einrichtungen sein.

Das Hauptinstallations-Modul kann beispielsweise als selbstständig ablauffähige Anwendung, beispielsweise ein so genannter "Installer" oder ein so genanntes "Setup-Programm" ausgestaltet und eingerichtet sein. Weiterhin kann das Hauptinstallations-Modul auch in Zusammenwirken mit einem übergeordneten Installations-Modul ablaufen bzw. ablauffähig sein. Das Hauptinstallations-Modul kann aber auch derart ausgestaltet sein, dass es im Wesentlichen die zu installierenden Daten enthält, während die Funktionalität der Installation von einem weiteren Modul übernommen wird.

Das Hauptinstallations-Modul ist zur Installation der Ablaufelemente vorgesehen bzw. dafür eingerichtet. Weiterhin kann das Hauptinstallations-Modul beispielsweise derart ausgestaltet sein, dass die Ablaufelemente unmittelbar durch das Hauptinstallations-Modul auf der Datenverarbeitungs-Einrichtung installiert werden. Weiterhin kann das Hauptinstallations-Modul auch zum Aufruf eines weiteren Installations-Moduls, welches dann wiederum die Ablaufelemente unmittelbar installiert, eingerichtet und ausgebildet sein.

Weiterhin kann das Hauptinstallations-Modul derart ausgebildet und eingerichtet sein, dass auch weitere Software-Elemente, Software-Anwendungen, Software-Module und/oder Software-Applikationen und/oder auch Anwendungs-Sprachelemente in anderen Sprachen, beispielsweise einer Standardsprache (z.B. English und/oder Deutsch) installiert werden oder installierbar sind.

Das Benutzersprache-Installations-Modul kann beispielsweise als selbstständig ablauffähige Anwendung (z. B. als so genannter "Installer" oder so genannte "Setup-Anwendung") ausgestaltet und eingerichtet sein. Weiterhin kann das Benutzersprache-Installations-Modul auch als nicht-eigenständig vollfunktionsfähiges Setup ausgebildet sein. In diesem Fall kann das Benutzersprache-Installations-Modul beispielsweise als instanzierte oder instanzierbare Frames ausgebildet und eingerichtet sein, die in Verbindung mit einem übergeordneten Master-Setup, im vorliegenden Fall beispielsweise dem Hauptinstallations-Modul, erst eine sinnvolle und/oder funktionsfähige Installation ergeben.

Das Registrieren des Benutzersprache-Installations-Moduls beim Hauptinstallations-Modul, insbesondere bei einer Plug-In-Schnittstelle des Hauptinstallations-Moduls kann beispielsweise im Rahmen oder im Verlauf eines Installierens des Benutzersprache-Installations-Moduls erfolgen und/oder auch beim eigentlichen Start der Installation der Software-Anwendung bzw. in dessen Verlauf.

Unter einem Plug-In wird insbesondere ein Software-Modul verstanden, welches beispielsweise eine oder mehrere Zusatz-Funktionalitäten zu einer übergeordneten Software hinzufügt, für welche das Plug-In vorgesehen ist. Zur Ankopplung von Plug-Ins weist die übergeordnete Software typischerweise eine so genannte Plug-In-Schnittstelle auf, über welche das Plug-In angesprochen wird und auch vom Plug-In ggf. erzeugte Informationen und Daten an die Haupt-Software zurück übermittelt werden. Eine besondere Eigenschaft der so genannten Plug-Ins ist, dass die Funktionalität der übergeordneten Haupt-Software unabhängig von der Anwesenheit des Plug-Ins ist.

Üblicherweise kann beim Installieren eines Plug-Ins eine Registrierung des Plug-Ins an der Plug-In-Schnittstelle der übergeordneten Software erfolgen. Auf diese Weise kann während des Ablaufs der übergeordneten Software erkannt werden, dass das Plug-In vorliegt, und dieses in den Ablauf der übergeordneten Software einbezogen werden. Wird von der übergeordneten Software kein registriertes Plug-In erkannt, so erfolgt deren Gesamtablauf ohne die Zusatzfunktionalität. Verbreitet sind solche Plug-Ins beispielsweise bei so genannten Web-Browsern zum Anzeigen bestimmter Grafik- oder Videodaten. Weiterhin werden derartige Plug-Ins auch in Grafik-Programmen zur Integration zusätzlicher Grafik-Effekte oder Bearbeitungs-Möglichkeiten eingesetzt.

Im Rahmen des Registrierens des Benutzersprache-Installations-Moduls oder auch im weiteren Verlauf eines Installations-Verfahrens gemäß der vorliegenden Beschreibung, insbesondere vorzugsweise vor dem Starten des Benutzersprache-Installations-Moduls, kann weiterhin auch eine Versionsverträglichkeit der Version des vermittels des Hauptinstallations-Moduls (mittelbar oder unmittelbar) installierten Ablauf-Programms mit einer Version des Benutzersprache-Installations-Moduls erfolgen. Dabei kann beispielsweise vorgesehen sein, dass bei einer Feststellung, dass beide Versionen miteinander verträglich sind, der weitere Programmablauf ungestört fortgesetzt wird. Zudem kann vorgesehen sein, dass, wenn eine Versionsunverträglichkeit festgestellt wird, eine Benutzer-Anfrage bezüglich einer weiteren Fortsetzung des Programms bzw. einer vorliegenden Störung ausgegeben wird oder beispielsweise auch das Verfahren zur Installation ganz abgebrochen wird.

Die Auswahl mindestens einer zu installierenden Sprachversion kann beispielsweise aus einer Auswahlliste oder vergleichbaren Datensammlung für für die aktuelle Installation der Software-Anwendung verfügbaren Sprachen umfassen. Solche Sprachen können beispielsweise registrierte, beispielsweise an der Plug-In-Schnittstelle registrierte, Benutzersprachen sein und/oder auch standardmäßig oder sonst vorgesehene ein- oder mehrere Sprachen.

Die Installation der Ablauf-Elemente kann beispielsweise unmittelbar durch das Hauptinstallations-Modul erfolgen oder auch durch Aufruf eines weiteren Installations-Moduls für die Ablaufelemente, insbesondere die sprachunabhängigen Elemente.

Die Abfrage, ob die Benutzersprache installiert werden soll, kann beispielsweise ein im Verlauf der Installation, beispielsweise beim Ablauf des Hauptinstallations-Moduls vorgesehene Überprüfung sein, ob bei der Auswahl mindestens einer zu installierenden Sprachversion die Benutzersprache alleine oder zumindest unter Anderem ausgewählt wurde. Die Abfrage kann beispielsweise auch durch ein übergeordnetes Installations-Steuerungs-Modul erfolgen. Dabei kann die Abfrage beispielsweise durch Prüfen der im Rahmen der Auswahl der mindestens einen zu installierenden Sprachversion erfassten Informationen ausgestaltet sein.

Bei einem positiven Abfrage-Ergebnis, d. h. wenn die Abfrage, ob die Benutzersprache installiert werden soll, zumindest sinngemäß mit einem "Ja" beantwortet wurde, wird das Benutzersprache-Installations-Modul gestartet, um die Anwendungs-Sprachelemente in der Benutzersprache zu installieren. Dabei kann das Starten beispielsweise vom Hauptinstallations-Modul, insbesondere über eine Plug-In-Schnittstelle des Hauptinstallations-Moduls gestartet werden. Das Starten kann entsprechend auch über eine übergeordnete Installations-Anwendung erfolgen. Wie vorstehend bereits dargestellt, kann das Benutzersprache-Installations-Modul dann selbsttätig die Installation durchführen oder auch in Zusammenwirken mit dem Haupt-Installations- bzw. übergeordneten Installations-Modul.

In einer vorteilhaften Ausgestaltung ist das Hauptinstallations-Modul zum Starten, Steuern und/oder Überwachen von zumindest Teilen des Verfahrens gemäß der vorliegenden Beschreibung eingerichtet und ausgebildet. Insbesondere vorteilhaft kann das Hauptinstallations-Modul zum Starten, Steuern und/oder Überwachen von zumindest Teilen des Verfahrens gemäß der vorliegenden Beschreibung über seine Plug-In-Schnittstelle ausgebildet und eingerichtet sein. In beiden fällen kann das Hauptinstallations-Modul dazu beispielsweise vor Verfahrensschritt a) gemäß der vorliegenden Beschreibung oder auch vor Verfahrensschritt b) gemäß der vorliegenden Beschreibung gestartet werden, um dann die jeweils nachfolgenden Verfahrensschritte gemäß der vorliegenden Beschreibung zu starten, zu steuern und/oder zu überwachen. Auch dieses Starten, Steuern und/oder Überwachen der nachfolgenden Verfahrensschritte kann beispielsweise über die Plug-In-Schnittstelle des Hauptinstallations-Moduls erfolgen.

Diese Ausgestaltung ermöglicht eine einfachere Organisation des Installationsverfahrens, da von einem Benutzer beispielsweise nur das Hauptinstallations-Modul gestartet werden muss und alle weiteren Zusatzmodule von diesem gesteuert, gestartet und/oder überwacht werden, so dass dafür kein neuer Benutzereingriff beispielsweise notwendig ist. Die Verwendung der Plug-In-Schnittstelle hat beispielsweise den Vorteil, dass die Kommunikation zwischen dem Hauptinstallations-Modul und weiteren Modulen, beispielsweise dem Benutzersprache-Installations-Modul, über eine standardisierte Schnittstelle erfolgt. Dadurch wird beispielsweise die Verwendbarkeit weiterer Module mit dem Hauptinstallations-Modul vereinfacht oder beispielsweise auch die Verwendung von Zusatzmodulen von Drittanbietern.

Zudem hat die Verwendung der Plug-In-Schnittstelle den weiteren Vorteil, dass die Verwendung von Zusatzinstallationsmodulen, wie beispielsweise dem Benutzersprache-Installations-Modul, sehr flexibel erfolgen kann und eine Installation bestimmter Module nicht von vornherein im Hauptinstallations-Modul vorgesehen bzw. vorbereitet werden muss. Die Plug-In-Schnittstelle ermöglicht dies über den Registrierungsmechanismus. Damit werden durch das Hauptinstallations-Modul Zusatzmodule nur installiert, wenn diese an der Plug-In-Schnittstelle registriert sind, ansonsten läuft die Hauptinstallation auch ohne Zusatz-Installationen ungestört durch.

Weiterhin kann das Hauptinstallations-Modul beispielsweise auch nur zur Steuerung und Überwachung von Verfahrensschritt c) gemäß der vorliegenden Beschreibung ausgebildet und eingerichtet sein. Zudem kann auch ein übergeordnetes Installations-Steuerungs-Modul vorgesehen sein, welches beispielsweise vor Verfahrenschritt a) oder Verfahrensschritt b) gemäß der vorliegenden Beschreibung gestartet wird und dann die jeweils nachfolgenden Verfahrensschritte startet, steuert und/oder überwacht.

Insbesondere kann vorgesehen sein, dass das Hauptinstallations-Modul oder das übergeordnete Installations-Steuerungsmodul vor Verfahrensschritt a1) gemäß der vorliegenden Beschreibung gestartet wird.

Das Benutzersprache-Installations-Modul kann beispielsweise als ein so genanntes Plug-In für das Hauptinstallations-Modul ausgebildet und eingerichtet sein.

Auf diese Weise können Benutzersprache-Installations-Module sehr flexibel erstellt und eingesetzt werden, da über den bereits vorstehend erläuterten Plug-In-Mechanismus ein flexibler Einsatz solcher Module ermöglicht wird. Weiterhin wird über die zumindest teilweise standardisierte Plug-In-Schnittstelle die Erstellung von Benutzersprache-Installations-Modulen flexibler und kann beispielsweise auch von Drittanbietern oder zumindest ohne Kenntnis von Details zur Funktionalität des Hauptinstallations-Moduls erstellt werden.

Die Plug-In-Schnittstelle des Hauptinstallations-Moduls kann z. B. Funktionen und/oder Callbacks bereitstellen, um
- lokalisierte GUI-Teile des Setups an den Aufrufer übergeben zu können;
- Produkt- und Versionsverträglichkeit zu prüfen und/oder
- Lokalisierte Setup-Instanzierungs-Daten an den Aufrufer übergeben zu können.

Weiterhin können die Plug-In-Schnittstellen des Hauptinstallations-Moduls sowie das Plug-In gemäß der vorliegenden Beschreibung ausgebildet und eingerichtet sein.

In einer weiteren vorteilhaften Ausgestaltung kann das Benutzersprache-Installations-Modul vorgegeben oder vorgebbare Installations-Sprachelemente betreffend die Installation der Software-Anwendung umfassen. Dabei können die Installations-Sprachelemente zur Ausgabe von Sprachinformationen in der Benutzersprache über eine Ausgabe-Einrichtung für einen Benutzer vorgesehen sein. Es können dann zusätzlich die folgenden Verfahrensschritte nachfolgend Verfahrensschritt a) gemäß der vorliegenden Beschreibung vorgesehen sein:
- a1) Auswahl einer im Verlaufe der Installation zu verwendenden Sprache;
- a2) Abfrage, ob die Benutzersprache als im Verlauf der Installation zu verwendende Sprache verwendet werden soll;
- a3) Bei positivem Abfrageergebnis gemäß Verfahrensschritt a2): Implementierung der Installations-Sprachelemente des Benutzersprache-Installations-Moduls derart, dass die an einen Benutzer im Verlaufe der Installation der Software-Anwendung ausgegebenen Sprachinformationen in der Benutzersprache ausgegeben werden.

Ein derart ausgestaltetes Benutzersprache-Installations-Modul hat den Vorteil, dass es nicht nur die Sprachinformationen enthält, die ein Benutzer im Verlauf des Ablaufs der Software-Anwendung erhält, sondern zusätzlich Sprachinformationen in der Benutzersprache erhält, die eine Ausgabe von Sprachinformationen in der Benutzersprache bereits während der Installation der Software ermöglicht. Auf diese Weise wird die Installation einer entsprechenden Software-Anwendung vermittels eines derart ausgebildeten Benutzersprache-Installations-Moduls weiter vereinfacht.

Die Ausgabeeinrichtung kann beispielsweise wiederum als Display, Monitor, Bildschirm, optische Ausgabeeinrichtung und/oder akustische oder Audio-Ausgabe-Einrichtung wie z.B. ein Lautsprecher eingerichtet und ausgebildet sein. Insbesondere können als Ausgabeeinrichtung auch mehrere der vorgenannten Einrichtungen kombiniert sein. Dabei kann diese Ausgabe-Einrichtung identisch mit der sein, auf welcher die Sprachausgabe beim Ablauf der Software-Anwendung erfolgt. Die Ausgabe-Einrichtung zur Ausgabe von Sprachinformationen während der Installation kann aber auch eine andere sein, als die, auf welcher dann die Sprachinformationen während des Ablaufs der Software-Anwendung ausgegeben werden.

Die Auswahl gemäß Verfahrensschritt a1) kann beispielsweise wiederum anhand einer Auswahlliste verfügbarer Sprachen bzw. einer vergleichbaren Vorgehensweise erfolgen. Dabei können die verfügbaren Sprachen beispielsweise an einer Plug-In-Schnittstelle registrierte Sprachen sein und/oder fest vorgegebene oder auch anderweitig vorgegebene weitere Sprachen, z. B. auch Standardsprachen.

Die Abfrage gemäß Verfahrensschritt a2) erfolgt beispielsweise durch das Hauptinstallations-Modul oder auch ein weiteres, z.B. übergeordnetes Installations-Steuerungs-Modul, welches beispielsweise die unter a1) getroffene Auswahl abfragt.

Gemäß Verfahrensschritt a3) werden dann die Installations-Sprachelemente des Benutzersprache-Installations-Moduls implementiert, wenn die Abfrage unter a2) ergibt, dass diese implementiert werden sollen. Dabei erfolgt die Implementierung derart, dass die an einen Benutzer im Verlaufe der Installation der Software-Anwendungen ausgegebenen Sprachinformationen in der Benutzersprache ausgegeben werden. Dabei kann die Implementierung beispielsweise analog zur Installation der Anwendungs-Sprachelemente gemäß Verfahrensschritt e) und den dazu gemachten Erläuterungen in der vorliegenden Beschreibung unter Verwendung des Benutzersprache-Installations-Moduls erfolgen.

Weiterhin kann die Implementierung auch derart erfolgen, dass die Installations-Sprachelemente aus dem Benutzersprache-Installations-Modul in einen eigentlichen Software-Installer, z. B. das Hauptinstallations-Modul oder ein übergeordnetes Installations-Steuerungs-Modul, übertragen werden. Weiterhin kann die Implementierung auch derart ausgestaltet und eingerichtet sein, dass die Installations-Sprachelemente des Benutzersprache-Installations-Moduls in eine Sprachelemente-Datei übertragen werden, welche von der vorstehend genannten Installations-Einrichtung, also z. B. dem Haupt-Installations-Modul oder dem übergeordneten Installations-Steuerungs-Modul, dann für die Text-, Bild- und/oder SprachAusgabe an einen Benutzer verwendet wird.

Es kann weiterhin ein weiteres Benutzersprache-Installations-Modul, insbesondere ein als Plug-In für das Hauptinstallations-Modul ausgebildetes weiteres Benutzersprache-Installations-Modul, zur Installation der Anwendungs-Sprachelemente in einer weiteren Benutzersprache auf der Datenverarbeitungseinrichtung vorgesehen sein. Dabei kann vorgesehen sein, dass im Verlauf des Verfahrensschritts a) gemäß der vorliegenden Beschreibung auch das weitere Benutzersprache-Installations-Modul beim Hauptinstallations-Modul, insbesondere bei einer Plug-In-Schnittstelle des Hauptinstallations-Moduls, registriert wird. Weiterhin können dann vorteilhafterweise die folgenden Verfahrenschritte nachfolgend Verfahrensschritt d) gemäß der vorliegenden Beschreibung vorgesehen sein:
d1) Abfrage, ob die weitere Benutzersprache installiert werden soll;
e1) bei positivem Abfrage-Ergebnis gemäß Verfahrensschritt d1: Starten des weiteren Benutzersprache-Installations-Moduls zur Installation der Anwendungs-Sprachelemente in der weiteren Benutzersprache.

Auf diese Weise wird das in der vorliegenden Beschreibung dargestellte Verfahren zur Installation einer Software-Anwendung weiter vereinfacht, da sehr flexibel benutzerangepasst auf eine einfache Weise und Ressourcen schonend Sprachen insbesondere über eine Plug-In-Schnittstelle in einen Installations-Ablauf übernommen werden können, ohne dass dies beim Erstellen der originalen Installations-Anwendung bereits fest eingeplant werden muss.

Insbesondere vorteilhaft am in der vorliegenden Beschreibung dargestellten Verfahren, ist die Möglichkeit, in einem Haupt-Installations-Modul nur sprachunabhängige Teile der Software-Anwendung zu bündeln und über diese zu installieren, während die sprachabhängigen Teile der Software-Anwendung über entsprechende Benutzersprache-Installations-Module oder auch nur eines davon in die Software-Anwendung eingebracht werden. Auf diese Weise erhält man ein besonders Ressourcen-schonendes Installations-Verfahren, da Sprachinformationen z. B. nicht redundant vorgehalten werden müssen.

Das weitere Benutzersprache-Installations-Modul, die Abfrage bzw. das Starten des Informations-Moduls und die vorstehend dargestellten Verfahrensschritte im Rahmen der Installation des weiteren Benutzersprache-Installations-Moduls können dabei entsprechend denen im Zusammenhang mit dem Benutzersprache-Installations-Modul, wie sie in der vorliegenden Beschreibung dargestellt sind, ausgebildet und eingerichtet sein.

Weiterhin kann vorgesehen sein, dass das Benutzersprache-Installations-Modul zur Deinstallation der Anwendungs-Sprachelemente in der Benutzersprache aus der Software-Anwendung ausgebildet und eingerichtet ist.

Es kann auch vorgesehen sein, dass auch das weitere Benutzersprache-Installations-Modul zur Deinstallation der Anwendungs-Sprachelemente in der weiteren Benutzersprache aus der Software-Anwendung ausgebildet und eingerichtet ist.

Auf diese Weise ist es möglich, die Software-Anwendung unter Verwendung der in der vorliegenden Beschreibung dargestellten Benutzersprache-Installations-Module auch an beispielsweise sich ändernde Benutzer anzupassen, indem durch den Ablauf des dargestellten Installations-Verfahrens auch bestimmte Benutzersprachen aus der Software-Anwendung entfernt und neue hinzugefügt werden können, ohne dafür wiederum gesonderte Software-Werkzeuge zur Verfügung stellen zu müssen.

Dazu kann das Verfahren zur Installation der Software-Anwendung nachfolgend den Verfahrensschritten e) oder e1) gemäß der vorliegenden Beschreibung die folgenden Verfahrensschritte umfassen:
f) Auswahl mindestens einer zu deinstallierenden Sprachversion der Software-Anwendung;
g) Abfrage, ob die Benutzersprache deinstalliert werden soll;
h) Bei positivem Abfrage-Ergebnis gemäß Verfahrensschritt g): Starten des Benutzersprache-Installations-Moduls zur Deinstallation der Anwendungs-Sprachelemente in der Benutzersprache.

Dabei können wiederum die Auswahl der Sprachversion, die Abfrage, ob diese deinstalliert werden soll bzw. das Starten des Benutzersprache-Installations-Moduls gemäß der vorliegenden Beschreibung ausgebildet und eingerichtet sein. Insbesondere kann die Auswahl der zu deinstallierenden Sprache aus einer Liste der in der Software-Anwendung installierten einen oder mehreren Benutzersprachen erfolgen.

Die vorstehende Aufgabe wird weiterhin gelöst von einem Verfahren zur Erstellung eines Hauptinstallations-Moduls und eines Benutzersprache-Installations-Moduls und/oder eines weiteren Benutzersprache-Installations-Moduls aus einem Installationsprogramm zur Installation einer Software-Anwendung, wobei die Software-Anwendung die Ablauf-Elemente sowie die Anwendungs-Sprachelemente in der Benutzersprache und/oder der weiteren Benutzersprache umfasst. Mittels des Verfahrens werden ein Hauptinstallations-Modul gemäß der vorstehenden Beschreibung sowie ein Benutzersprache-Installations-Modul und/oder ein weiteres Benutzersprache-Installations-Modul gemäß der vorstehenden Beschreibung erstellt.

Insbesondere kann die Erstellung des Hauptinstallations-Moduls sowie der Benutzersprache-Installations-Module derart erfolgen, dass das Hauptinstallations-Modul nur sprachunabhängige Teile der zur Installation der Software-Anwendung notwendigen Elemente umfasst und installiert, während die sprachabhängigen Teile der Software-Anwendung in der jeweiligen Benutzersprache im jeweiligen Benutzersprache-Installations-Modul gebündelt sind und über dieses in der Software-Anwendung jeweils installiert werden.

Auf diese Weise kann durch Zerlegung eines "herkömmlichen" Installers ein Ressourcen-schonenderes Installationsverfahren ermöglicht werden, indem durch Auftrennung der sprachabhängigen und sprachunabhängigen Teile flexibel an bestimmte Benutzersprachen angepasste Sprachversionen der Software-Anwendung installiert werden können, ohne dass beispielsweise sämtliche oder auch möglichst viele Sprachen bereits von vornherein in einer dann entsprechend großen Installationsanwendung vorgesehen sein müssen.

Die vorstehende Aufgabe wird weiterhin gelöst von einem Computersystem mit einer Anwendungsumgebung, in welcher eine Anwendung zur Installation einer Software-Anwendung gemäß der vorliegenden Beschreibung auf einer Datenverarbeitungs-Einrichtung läuft, wobei die Anwendung zum Ablauf eines Verfahrens gemäß der vorliegenden Beschreibung eingerichtet und ausgebildet ist.

Durch die Verwendung der vorstehend genannten Hauptinstallations- und Benutzersprache-Installations-Module auf dem Computersystem werden auf diesem die in der vorstehenden Beschreibung genannten Vorteile realisiert.

Weiterhin wird die vorstehende Aufgabe gelöst von einem Computersystem mit einer Anwendungsumgebung, in welcher eine Anwendung zur Erstellung eines Haupt-Installations-Moduls und eines Benutzersprache-Installations-Moduls und/oder eines weiteren Benutzersprache-Installations-Moduls aus einem Installationsprogramm zur Installation einer Software-Anwendung gemäß der vorliegenden Beschreibung, wobei die Anwendung zum Ablauf eines Verfahrens zur Erstellung eines Hauptinstallations-Moduls und eines Benutzersprache-Installations-Moduls gemäß der vorliegenden Beschreibung ausgebildet und eingerichtet ist.

In einem solchen Computersystem werden durch die Einrichtung des genannten Verfahrens zur Erstellung eines Hauptinstallations-Moduls und eines oder mehrerer Benutzersprache-Installations-Module die vorstehend genannten Vorteile realisiert.

Die vorstehend genannte Aufgabe wird weiterhin gelöst von einem Computerprogramm-Produkt, das auf einem Computergeeigneten Medium gespeichert ist und direkt in den internen Speicher eines digitalen Computers geladen werden kann, wobei das Computerprogramm-Produkt Software-Code-Abschnitte umfasst, mit welchen die Verfahrensschritte gemäß der vorliegenden Beschreibung ausgeführt werden, wenn es auf einem Computer läuft.

Dabei wird unter einem digitalen Computer oder Computer in diesem Zusammenhang eine Datenverarbeitungs-Einrichtung, wie beispielsweise ein PC, eine Workstation, eine Automatisierungs-Einrichtung, eine speicherprogrammierbare Steuerung oder andere Steuerungseinheiten oder Datenverarbeitungseinheiten verstanden. Ein Computer-geeignetes Medium ist beispielsweise eine CD, eine DVD, eine Festplatte, eine Solid-State-Drive oder eine vergleichbare Speichereinrichtung zur Speicherung digitaler Daten, welche von einem vorstehend genannten Computer oder einer entsprechenden Datenverarbeitungs-Einrichtung gelesen werden können oder an eine solche übertragen werden können.

Ein als solches Computer-Programm-Produkt beispielsweise realisiertes Hauptinstallations-Modul und ein oder mehrere Benutzersprache-Installations-Module weisen zumindest unter Anderem die in der vorstehend genannten Beschreibung Vorteile des erfindungsgemäßen Verfahrens auf.

Weitere vorteilhafte Ausgestaltungen finden sich in den Unteransprüchen.

Nachfolgend wird die vorliegende Erfindung beispielhaft mit Bezug auf die beiliegenden Figuren näher erläutert.

Es zeigen:
- Figur 1: Beispiel für einen Software-Installationsablauf mit Master-Setup und drei Sprachmodulen;
- Figur 2: Beispiel für den Ablauf einer Installations-Änderung einer Software-Anwendung mit den in Figur 1 dargestellten Modulen.

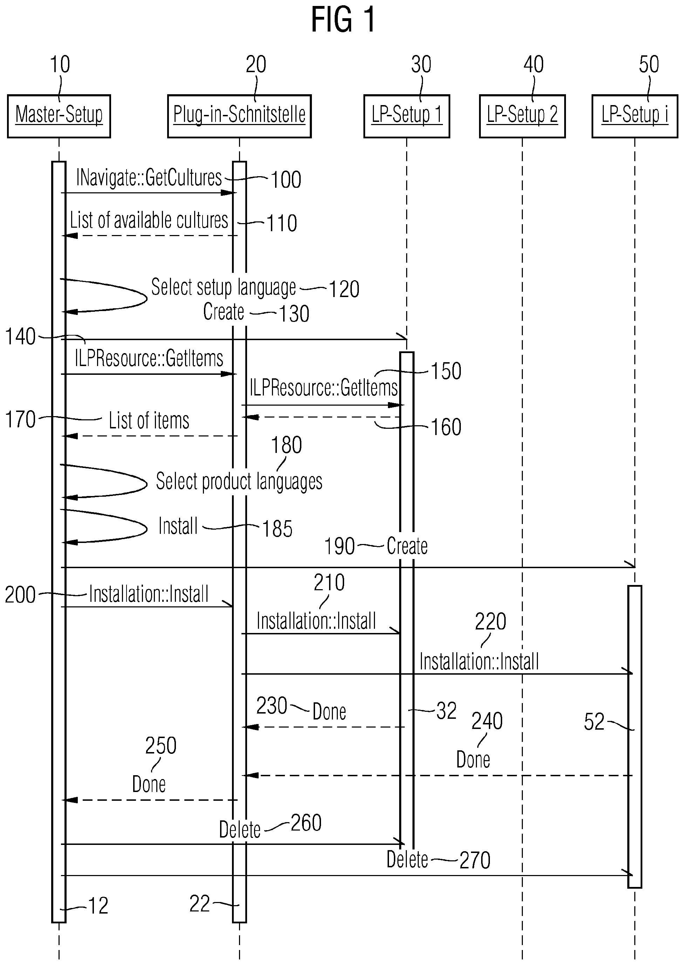

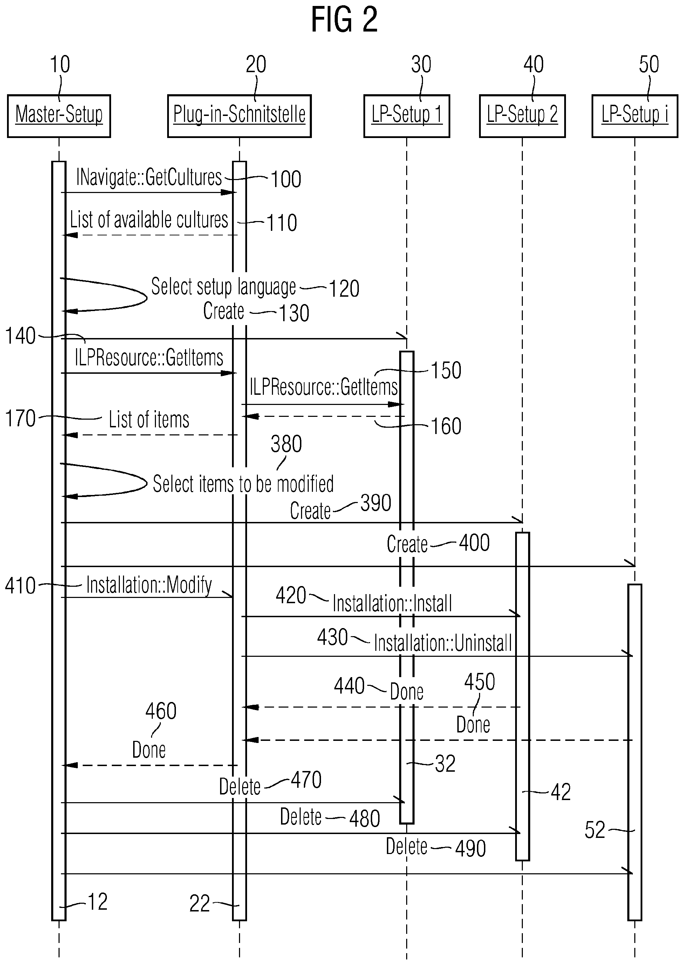

Figur 1 zeigt ein Beispiel für einen Verfahrensablauf zur Installation einer Software-Anwendung gemäß der vorliegenden Beschreibung, wobei zur Installation der sprachunabhängigen Teile der Software-Anwendung eine Haupt-Installations-Anwendung 10 mit einer Plug-In-Schnittstelle 20 verwende wird. Zur Installation von drei möglichen Benutzersprachen der Software-Anwendung sind zusätzlich ein erstes Sprach-Installationsmodul 30 für eine erste Benutzersprache, ein zweites Sprach-Installationsmodul 40 für eine zweite Benutzersprache sowie ein drittes Sprachinstallations-Modul 50 zur Installation einer dritten Benutzersprache vorgesehen. Dabei ist das Hauptinstallationsmodul 10 ein Beispiel für ein Hauptinstallations-Modul gemäß der vorliegenden Beschreibung. Die Sprachinstallations-Module 30, 40, 50 sind jeweils Beispiele für ein Benutzersprache-Installations-Modul gemäß der vorliegenden Beschreibung. In der nachfolgenden Erläuterung sowie den Figuren 1 und 2 wird das Hauptinstallations-Modul 10 als Master-Setup 10 sowie die Sprachinstallations-Module 30, 40, 50 jeweils als "Language Pack" 30, 40, 50 bezeichnet.

In Figur 1 ist vertikal von oben nach unten der zeitliche Ablauf der Installation der Software-Anwendung dargestellt. Dabei sind unter den jeweiligen Modulen 10, 30, 40, 50 und der Plug-In-Schnittstelle 20 dargestellte Balken 12, 22, 32, 52 eine Darstellung dafür, dass in diesem Zeitraum eine dem Modul 10, 30, 40, 50 bzw. der Schnittstelle 20 zugeordnete Instanz in der Ablaufumgebung des Installationsprogramms gestartet und aktiv ist.

Zu Beginn des in Figur 1 dargestellten Verfahrens erfolgt die Auswahl der Sprache, in welcher die Benutzerführung während der Installation erfolgt. Dazu fragt das Master-Setup 10 bei der Plug-In-Schnittstelle 20 in einem Verfahrensschritt 100, die dort registrierten Language-Packs 30, 40, 50 ab, welche in einem weiteren Verfahrensschritt 110 von der Plug-In-Schnittstelle 20 zum Master-Setup zurück übertragen werden. Durch das Master-Setup 10 erfolgt dann in einem weiteren Schritt 120 bei einem Benutzer die Abfrage, welche der verfügbaren Sprachen ausgewählt werden sollen. Im vorliegenden Beispiel wurde die erste Benutzersprache als Installations-Sprache ausgewählt, so dass in einem nachfolgenden Verfahrensschritt 130 eine Instanz zum ersten Language-Pack 30 gestartet wird und dann in einem Schritt 140 das Master-Setup 10 bei der Plug-In-Schnittstelle 20 einen Installations-Sprachbausteine-Abfragebefehl für das erste Language-Pack 30 absetzt. Im Schritt 150 fragt die Plug-In-Schnittstelle 20 dann beim ersten Language-Pack 30 die für die Installation in der ersten Benutzersprache dort gespeicherten Sprachinformationen ab, welche in einem nächsten Schritt 160 an die Plug-In-Schnittstelle 20 und dann in einem weiteren Schritt 170 an das Master-Setup 10 übertragen werden.

Nunmehr beginnt die eigentliche Installation der Software-Anwendung mit einer Auswahl der für die Software-Anwendung zu installierenden Sprachen durch einen Benutzer in einem Verfahrensschritt 180.

In einem nächsten Verfahrensschritt 185 wird nun die eigentliche Installation der sprachunabhängige Teil der Software-Anwendung vom Master-Setup 10 gestartet. Im vorliegenden Beispiel hat die Auswahl 180 der mit der Software-Anwendung zu installierenden Sprachen ergeben, dass die Benutzersprache 1 und 3 installiert werden sollen. Da zum Language-Pack 1 30 bereits die Instanz 32 gestartet wurde, muss nun nur noch in einem Verfahrensschritt 190 zum Language-Pack 3 50 ebenfalls eine Instanz 52 gestartet werden. Danach gibt das Master-Setup 10 an die Plug-In-Schnittstelle 20 über den Verfahrensschritt 200 die Anweisung, die Benutzersprachen 1 und 3 zu installieren.

Daraufhin erfolgt in einem Verfahrensschritt 210 die Anweisung der Plug-In-Schnittstelle 20 an das Language-Pack 30 zum Beginn der Installation der ersten Benutzersprache. Nachfolgend gibt die Plug-In-Schnittstelle 20 an das Language-Pack 3 50 die weitere Anweisung 220 zum Installieren der dritten Benutzersprache. Nachdem die Sprachelemente der ersten Benutzersprache durch das Language-Pack 1 30 vollständig installiert wurden, gibt dieses an die Plug-In-Schnittstelle eine "Erledigt"-Information 230. Dasselbe tut das dritte Language-Pack 50 in einem Verfahrensschritt 240 nach Beendigung der Installation der dritten Benutzersprache. Nachdem durch die Plug-In-Schnittstelle 20 festgestellt wurde, dass alle vorgesehenen Language-Packs 30, 50 installiert wurden, meldet diese in einem Verfahrensschritt 240 an das Master-Setup 10 die erfolgreiche Installation der ausgewählten Sprachen. Daraufhin werden in den Verfahrensschritten 260 und 270 die Instanzen zu den Language-Packs 1 30 und Language-Pack 3 50 wieder beendet.

Die Instanz 12 zum Master-Setup 10 sowie die Instanz 22 zur Plug-In-Schnittstelle 20 bleiben bis zum Ende der vollständigen Installation der gesamten Software-Anwendung aktiv.

Figur 2 zeigt ein Beispiel für einen Installations- und Deinstallationsablauf zur Änderung der vermittels eines Ablaufs gemäß Figur 1 installierten Software-Anwendung. Dabei werden wiederum die bereits in Figur 1 dargestellten Software-Module und Schnittstellen 10, 20, 30, 40, 50 verwendet. Auch die Verfahrensschritte 100, 110, 120, 130, 140, 150, 160, 170 zur Auswahl der Installations-Deinstallations-Sprache, welche wiederum die erste Benutzersprache ist, entspricht den bereits in Bezug auf die Figur 1 erläuterten Verfahrensschritten.

In einem weiteren Verfahrensschritt 380 wird durch einen Benutzer beim Master-Setup 10 bestimmt, dass die dritte Benutzersprache deinstalliert und die zweite Benutzersprache installiert werden soll. Daraufhin wird in einem Verfahrensschritt 390 eine Instanz zum Language-Pack 2 40 und im nächsten Verfahrensschritt 400 eine Instanz zum Language-Pack 3 50 gestartet.

Im nächsten Verfahrensschritt 410 gibt das Master-Setup 10 an die Plug-In-Schnittstelle 20 den Befehl, die Deinstallation und Installation gemäß den Vorgaben auszuführen. Daraufhin geht von der Plug-In-Schnittstelle 20 eine Anweisung 420 an das Language 2 40 zum Starten der Installation der Benutzersprache 2. weiterhin ergeht ein Befehl 430 von der Plug-In-Schnittstelle 20 an das Language-Pack 3 50 zum Beginn der Deinstallation der Benutzersprache 3 aus der Software-Anwendung.

Nach erfolgter Installation der Benutzersprache 2 durch das Language-Pack 2 40 erfolgt eine "Erledigt"-Nachricht 440 vom Language-Pack 2 40 an die Plug-In-Schnittstelle 20. Desgleichen erfolgt eine "Erledigt"-Nachricht 450 nach Beendigung der Deinstallation der Benutzersprache 3 vom Language-Pack 3 50 an die Benutzer-Schnittstelle 20.

Nach vollständiger Erledigung des Modifizierungs-Auftrages sendet nun die Plug-In-Schnittstelle 20 eine entsprechende "Erledigt"-Erklärung 460 an das Master-Setup. Daraufhin werden vom Master-Setup in entsprechenden Anweisungen 470, 480, 490 die Instanz 32 zum ersten Language-Pack 30, die Instanz 42 zum zweiten Language-Pack 40 sowie die Instanz 52 zum dritten Language-Pack 50 beendet.

Die vorliegende Erfindung beschreibt ein Installationsverfahren, bei welchem durch Auftrennung von Installationsmodulen in ein z. B. nur sprachunabhängige Teile umfassendes Hauptinstallations-Modul und die sprachabhängigen Teile umfassenden ein oder mehrere Sprach-Installations-Module, , ein flexibles, einfaches und Ressourcen schonendes System zur Installation einer Software-Anwendung erreicht wird. Vorteilhafterweise können die Sprach-Installations-Module über eine Plug-In-Schnittstelle an das Hauptinstallations-Modul angekoppelt werden oder ankoppelbar sein.

## Patentansprüche

1. Verfahren zur Installation einer Softwareanwendung auf einer Datenverarbeitungseinrichtung, wobei die Softwareanwendung
- Ablauf-Elemente zum Erreichen einer Funktionalität der Softwareanwendung und
- vorgegebene oder vorgebbare Anwendungs-Sprachelemente zur Ausgabe von Sprachinformationen für einen Benutzer der Softwareanwendung in einer Benutzersprache über eine Ausgabeeinrichtung umfasst,
**dadurch gekennzeichnet,**
**dass** ein Hauptinstallations-Modul (10) zur Installation der Ablauf-Elemente auf der Datenverarbeitungseinrichtung und ein Benutzersprache-Installations-Modul (30, 40, 50) zur Installation der Anwendungs-Sprachelemente in der Benutzersprache sowie ein weiteres Benutzersprache-Installations-Modul (30, 40, 50) zur Installation der Anwendungs-Sprachelemente in einer weiteren Benutzersprache auf der Datenverarbeitungseinrichtung vorgesehen ist, und dass das Benutzersprache-Installations-Modul (30, 40, 50) sowie das weitere Bcnutzersprache-Installations-Modul (30, 40, 50) jeweils als ein Plug-In für das Hauptinstallations-Modul ausgebildet und eingerichtet sind,
wobei das Verfahren die nachfolgenden Schritte umfasst:
a.) Registrieren des Benutzersprache-Installations-Moduls (30, 40, 50) sowie das weitere Benutzersprache-Installations-Modul (30, 40, 50) bei einer Plug-In-Schnittstelle (20) des Hauptinstallations-Moduls (10);
b.) Auswahl mindestens einer zu installierenden Sprachversion der Software-Anwendung;
c.) Installation der Ablauf-Elemente;
d.) Abfrage, ob die Benutzersprache installiert werden soll und Abfrage, ob die weitere Benutzersprache installiert werden soll;
e.) bei positivem Abfrageergebnis gemäß Verfahrensschritt d.) bezüglich der Benutzersprache und der weiteren Benutzersprache: Starten des Benutzersprache-Installations-Moduls (30, 40, 50) und des weiteren Benutzersprache-Installations-Moduls (30, 40, 50) zur Installation der Anwendungs-Sprachelemente in der Benutzersprache und in der weiteren Benutzersprache.

2. Verfahren nach Anspruch 1,
**dadurch gekennzeichnet,**
**dass** das Hauptinstallations-Modul (10) zum Starten, Steuern und/oder Überwachen von zumindest Teilen des Verfahrens gemäß Anspruch 1, insbesondere über seine Plug-In-Schnittstelle (20), ausgebildet und eingerichtet ist und das Hauptinstallations-Modul (10) dazu vor Verfahrenschritt a.) oder vor Verfahrensschritt b.) gestartet wird, um die jeweils nachfolgenden Verfahrensschritte gemäß einem der Ansprüchen 1 oder 3 bis 7 zu starten, zu steuern und/oder zu überwachen, insbesondere über seine Plug-In-Schnittstelle (20) zu starten, zu steuern und/oder zu überwachen.

3. Verfahren nach einem der Ansprüche 1 bis 2,
**dadurch gekennzeichnet,**
**dass** das Benutzersprache-Installations-Modul (30, 40, 50) vorgegebene oder vorgebbare Installations-Sprachelemente betreffend die Installation der Software-Anwendung umfasst, wobei die Installations-Sprachelemente zur Ausgabe von Sprachinformationen in der Benutzersprache über eine Ausgabeeinrichtung für einen Benutzer vorgesehen sind, und
wobei das Verfahren nachfolgend Schritt a.) die nachfolgenden Schritte umfasst:
a1.) Auswahl einer im Verlaufe der Installation zu verwendenden Sprache;
a2.) Abfrage, ob die Benutzersprache als im Verlauf der Installation zu verwendende Sprache verwendet werden soll;
a3.) bei positivem Abfrageergebnis gemäß Verfahrensschritt a2.): Implementierung der Installations-Sprachelemente des Benutzersprache-Installations-Moduls (30, 40, 50) derart, das die an einen Benutzer im Verlaufe der Installation der Softwareanwendung ausgegebenen Sprachinformationen in der Benutzersprache ausgegeben werden.

4. Verfahren nach einem der Ansprüche 1 bis 3,
**dadurch gekennzeichnet,**
**dass** das Benutzersprache-Installations-Modul (30, 40, 50) zur Deinstallation der Anwendungs-Sprachelemente in der Benutzersprache aus der Software-Anwendung ausgebildet und eingerichtet ist,
und / oder
**dass** das weitere Benutzersprache-Installations-Modul (30, 40, 50) zur Deinstallation der Anwendungs-Sprachelemente in der weiteren Benutzersprache aus der Software-Anwendung ausgebildet und eingerichtet ist.

5. Verfahren nach Anspruch 4 **dadurch gekennzeichnet,**
**dass** das Verfahren nachfolgend den Verfahrensschritten e.) oder e1.) die folgenden Verfahrensschritte umfasst:
f.) Auswahl mindestens einer zu deinstallierenden Sprachversion der Software-Anwendung;
g.) Abfrage, ob die Benutzersprache deinstalliert werden soll;
h.) bei positivem Abfrageergebnis gemäß Verfahrensschritt g.): Starten des Benutzersprache-Installations-Moduls (30, 40, 50) zur Deinstallation der Anwendungs-Sprachelemente in der Benutzersprache.

6. Computersystem mit einer Anwendungsumgebung, in welcher eine Anwendung zur Installation einer Softwareanwendung auf einer Datenverarbeitungseinrichtung läuft, wobei die Anwendung Befehle umfasst, die bei der Ausführung der Anwendung durch die Datenverarbeitungseinrichtung diese veranlassen, ein Verfahren gemäß einem der Ansprüche 1 bis 5 auszuführen.

7. Computerprogrammprodukt, das auf einem computergeeigneten Medium gespeichert ist und direkt in den internen Speicher eines digitalen Computers geladen werden kann, wobei das Computerprogrammprodukt Befehle umfasst, die bei der Ausführung des Computerprogrammprodukts auf den Computer diesen veranlassen, die Verfahrensschritte gemäß einem der Ansprüche 1 bis 5 auszuführen.

## Claims

1. Method for installing a software application on a data processing device, wherein the software application comprises
- sequence elements for achieving a functionality of the software application, and
- predefined or predefinable application language elements for outputting language information for a user of the software application in a user language via an output device,
**characterized**
**in that** a main installation module (10) for installing the sequence elements on the data processing device and a user language installation module (30, 40, 50) for installing the application language elements in the user language and a further user language installation module (30, 40, 50) for installing the application language elements in a further user language on the data processing device are provided, and
**in that** the user language installation module (30, 40, 50) and the further user language installation module (30, 40, 50) are each designed and configured as a plug-in for the main installation module,
wherein the method comprises the following steps:
a.) registering the user language installation module (30, 40, 50) and the further user language installation module (30, 40, 50) with a plug-in interface (20) of the main installation module (10);
b.) selecting at least one language version of the software application to be installed;
c.) installing the sequence elements;
d.) querying whether the user language is intended to be installed and querying whether the further user language is intended to be installed;
e.) in the event of a positive query result according to method step d.) with respect to the user language and the further user language: starting the user language installation module (30, 40, 50) and the further user language installation module (30, 40, 50) for installing the application language elements in the user language and in the further user language.

2. Method according to Claim 1,
**characterized**
**in that** the main installation module (10) is designed and configured to start, control and/or monitor at least parts of the method according to Claim 1, in particular via its plug-in interface (20), and the main installation module (10) is started before method step a.) or before method step b.) in order to start, control and/or monitor the respectively subsequent method steps according to one of Claims 1 or 3 to 7, in particular to start, control and/or monitor them via its plug-in interface (20).

3. Method according to one of Claims 1 to 2,
**characterized**
**in that** the user language installation module (30, 40, 50) comprises predefined or predefinable installation language elements relating to the installation of the software application, wherein the installation language elements are provided for the purpose of outputting language information in the user language for a user via an output device, and
wherein, after step a.), the method comprises the following steps:
a1.) selecting a language to be used during the installation;
a2.) querying whether the user language is intended to be used as the language to be used during the installation;
a3.) in the event of a positive query result according to method step a2.): implementing the installation language elements of the user language installation module (30, 40, 50) in such a manner that the language information output to a user during the installation of the software application is output in the user language.

4. Method according to one of Claims 1 to 3,
**characterized**
**in that** the user language installation module (30, 40, 50) is designed and configured to uninstall the application language elements in the user language from the software application,
and/or
**in that** the further user language installation module (30, 40, 50) is designed and configured to uninstall the application language elements in the further user language from the software application.

5. Method according to Claim 4,
**characterized**
**in that**, after method step e.) or e1.), the method comprises the following method steps:
f.) selecting at least one language version of the software application to be uninstalled;
g.) querying whether the user language is intended to be uninstalled;
h.) in the event of a positive query result according to method step g.): starting the user language installation module (30, 40, 50) for uninstalling the application language elements in the user language.

6. Computer system having an application environment in which an application for installing a software application on a data processing device runs, wherein the application comprises instructions which, when the application is executed by the data processing device, cause the latter to carry out a method according to one of Claims 1 to 5.

7. Computer program product which is stored on a computer-suitable medium and can be directly loaded into the internal memory of a digital computer, wherein the computer program product comprises instructions which, when the computer program product is executed on the computer, cause the latter to carry out the method steps according to one of Claims 1 to 5.

## Revendications

1. Procédé destiné à l'installation d'une application logicielle sur un dispositif de traitement de données, dans lequel l'application logicielle comprend
- des éléments de déroulement destinés à atteindre une fonctionnalité de l'application logicielle et
- des éléments vocaux d'application prédéfinis ou aptes à être prédéfinis destinés à l'envoi d'informations vocales pour un utilisateur de l'application logicielle dans une langue d'utilisateur par l'intermédiaire d'un dispositif d'envoi,
**caractérisé en ce que**
un module d'installation principal (10) destiné à l'installation des éléments de déroulement sur le dispositif de traitement de données et un module d'installation de langue d'utilisateur (30, 40, 50) est prévu pour l'installation des éléments vocaux d'application dans la langue d'utilisateur ainsi qu'un autre module d'installation de langue d'utilisateur (30, 40, 50) est prévu pour l'installation des éléments vocaux d'application dans une autre langue d'utilisateur sur le dispositif de traitement de données, et **en ce que** le module d'installation de langue d'utilisateur (30, 40, 50) ainsi que l'autre module d'installation de langue d'utilisateur (30, 40, 50) sont respectivement réalisés et adaptés en tant que module d'extension pour le module d'installation principal,
dans lequel le procédé comprend les étapes suivantes :
a.) enregistrement du module d'installation de langue d'utilisateur (30, 40, 50) ainsi que de l'autre module d'installation de langue d'utilisateur (30, 40, 50) au niveau d'une interface de module d'extension (20) du module d'installation principal (10) ;
b.) sélection d'au moins une version linguistique à installer de l'application logicielle ;
c.) installation des éléments de déroulement ;
d.) interrogation visant à déterminer si la langue d'utilisateur doit être installée et interrogation visant à déterminer si l'autre langue d'utilisateur doit être installée ;
e.) lors d'un résultat d'interrogation positif selon l'étape de procédé d.) en ce qui concerne la langue d'utilisateur et l'autre langue d'utilisateur : lancement du module d'installation de langue d'utilisateur (30, 40, 50) et de l'autre module d'installation de langue d'utilisateur (30, 40, 50) destinés à l'installation des éléments vocaux d'application dans la langue d'utilisateur et dans l'autre langue d'utilisateur.

2. Procédé selon la revendication 1,
**caractérisé en ce que**
le module d'installation principal (10) est réalisé et adapté pour le lancement, la commande et/ou la surveillance d'au moins des parties du procédé selon la revendication 1, en particulier par l'intermédiaire de son interface de module d'extension (20), et le module d'installation principal (10) est lancé en plus avant l'étape de procédé a.) ou avant l'étape de procédé b.) pour lancer, commander et/ou surveiller les étapes de procédé respectivement consécutives selon l'une des revendications 1 ou 3 à 7, en particulier pour les lancer, les commander et/ou les surveiller par l'intermédiaire de son interface de module d'extension (20) .

3. Procédé selon l'une des revendications 1 à 2,
**caractérisé en ce que**
le module d'installation de langue d'utilisateur (30, 40, 50) comprend des éléments vocaux d'installation prédéfinis ou aptes à être prédéfinis concernant l'installation de l'application logicielle, dans lequel les éléments vocaux d'installation sont prévus pour l'envoi d'informations vocales dans la langue d'utilisateur par l'intermédiaire d'un dispositif d'envoi pour un utilisateur, et
dans lequel le procédé comprend consécutivement à l'étape a.) les étapes suivantes :
a1.) sélection d'une langue à utiliser au cours de l'installation ;
a2.) interrogation visant à déterminer si la langue d'utilisateur doit être utilisée en tant que langue à utiliser au cours de l'installation ;
a3.) lors d'un résultat d'interrogation positif selon l'étape de procédé a2.) : mise en œuvre des éléments vocaux d'installation du module d'installation de langue d'utilisateur (30, 40, 50) de telle sorte que les informations vocales envoyées à un utilisateur au cours de l'installation de l'application logicielle sont envoyées dans la langue d'utilisateur.

4. Procédé selon l'une des revendications 1 à 3,
**caractérisé en ce que**
le module d'installation de langue d'utilisateur (30, 40, 50) est réalisé et adapté pour la désinstallation des éléments vocaux d'application dans la langue d'utilisateur à partir de l'application logicielle,
et/ou
**en ce que** l'autre module d'installation de langue d'utilisateur (30, 40, 50) est réalisé et adapté pour la désinstallation des éléments vocaux d'application dans l'autre langue d'utilisateur à partir de l'application logicielle.

5. Procédé selon la revendication 4,
**caractérisé en ce que**
le procédé consécutivement aux étapes de procédé e.) ou e1.) comprend les étapes de procédé suivantes :
f.) sélection d'au moins une version linguistique à désinstaller de l'application logicielle ;
g.) interrogation visant à déterminer si la langue d'utilisateur doit être désinstallée ;
h.) lors d'un résultat d'interrogation positif selon l'étape de procédé g.) : lancement du module d'installation de langue d'utilisateur (30, 40, 50) destiné à la désinstallation des éléments vocaux d'application dans la langue d'utilisateur.

6. Système informatique comportant un environnement d'application, dans lequel une application destinée à l'installation d'une application logicielle est exécutée sur un dispositif de traitement de données, dans lequel l'application comprend des instructions qui, lors de l'exécution de l'application par le biais du dispositif de traitement de données, amènent celui-ci à exécuter un procédé selon l'une des revendications 1 à 5.

7. Produit de programme informatique qui est mis en mémoire sur un support informatique et peut être chargé directement dans la mémoire interne d'un ordinateur numérique, dans lequel le produit de programme informatique comprend des instructions qui, lors de l'exécution du produit de programme informatique sur l'ordinateur, amènent celui-ci à exécuter les étapes de procédé selon l'une des revendications 1 à 5.
